# FASCICULE DE BREVET EUROPEEN

(11) **EP 3 150 416 B1**
(45) Date de publication et mention de la délivrance du brevet: **04.07.2018**
(21) Numéro de dépôt: 16184817.1
(22) Date de dépôt: 18.08.2016
(51) Int. Cl.: B60K 11/04, B60K 11/08, F28F 9/00

(54) **ENSEMBLE POUR FACE AVANT DE VEHICULE ET VEHICULE EQUIPE D'UN TEL ENSEMBLE**
ANORDNUNG FÜR DIE FRONTSEITE EINES FAHRZEUGS, UND MIT EINER SOLCHEN ANORDNUNG AUSGESTATTETES FAHRZEUG
ASSEMBLY FOR FRONT END OF VEHICLE AND VEHICLE PROVIDED WITH SUCH AN ASSEMBLY

(30) Priorité: 29.09.2015 FR 1559160
(43) Date de publication de la demande: 05.04.2017
(73) Titulaire: PSA Automobiles SA, 78300 Poissy (FR)
(72) Inventeur: MAGAS, Mihaela Maria, 70110 Autrey les Cerre (FR); MERESSE, Ludovic, 25750 Arcey (FR)

(56) Documents cités:
- EP-A1- 2 080 658
- US-A1- 2014 084 624

## Description

L'invention se situe dans le domaine des équipements de face avant des véhicules automobiles, et concerne plus particulièrement des ensembles comprenant des modules d'entrée d'air piloté.

De nos jours, afin de répondre à certaines exigences en termes de réparabilité, le groupe moto-ventilateur (GMV) d'un véhicule automobile est souvent placé en aval de sa façade avant. Ceci implique, en contrepartie, de faire entrer sous le capot du véhicule une quantité d'air extérieur suffisante pour satisfaire à ses besoins de ventilation et d'échanges thermiques, notamment en provenance du radiateur. A cet effet, les dimensions des entrées d'air sous capot du véhicule ont été augmentées.

Afin que cette entrée d'air accrue ne soit pas responsable d'une dégradation trop importante des performances aérodynamiques du véhicule et donc d'une augmentation de sa consommation en carburant, la façade avant est alors équipée de volets mobiles. Ces volets mobiles font partie d'un module d'entrée d'air piloté (MEAP) et sont aptes à être pilotés par un moteur entre une position ouverte lorsqu'il est nécessaire d'augmenter les échanges thermiques du GMV et une position fermée dans le cas contraire, afin de diminuer la trainée aérodynamique et réduire la consommation de carburant du véhicule. Le MEAP est typiquement fixé sous la poutre supérieure de pare-chocs et sur le déflecteur du pare-chocs, c'est-à-dire sur des éléments déformables. Il va donc se déplacer en cas de choc en direction du groupe moto-ventilateur, porté par la poutre de pare-chocs.

Il est également possible d'utiliser un MEAP présentant une surface de prise d'air accrue, qui va par exemple s'étendre à la fois au-dessus et au-dessous de la poutre de pare-chocs. Un tel MEAP comprend par exemple deux cassettes disposées étagées l'une au-dessus de l'autre selon la direction verticale, si bien qu'une cassette ou au moins une partie d'une cassette se trouve à une hauteur supérieure à celle de la poutre de pare-chocs. Chaque cassette comporte un dispositif mécanique d'ouverture et de fermeture ou de limitation du passage d'air en direction du groupe moto-ventilateur par le biais de volets mobiles.

Un MEAP à deux cassettes va généralement comporter un support sur lequel sont maintenues lesdites cassettes et qui est fixé sur la face avant du groupe moto-ventilateur. Cette fixation se fait par exemple par l'intermédiaire de quatre liaisons disposées aux quatre coins du MEAP. En cas de choc, l'ensemble formé par le groupe moto-ventilateur et le MEAP va se déplacer vers l'arrière du véhicule selon l'axe longitudinal de celui-ci, poussé par les éléments de pare-chocs (supports, armatures, etc.). Ceci est rendu possible par la fixation du groupe moto-ventilateur sur les traverses inférieure et supérieure de façade au moyen de plots mobiles configurés pour se déclipper lorsqu'une pression suffisante est exercée sur le groupe moto-ventilateur et pour autoriser une course d'enfoncement selon l'axe longitudinal du véhicule sur une distance prédéfinie, par exemple de 40 mm. Malheureusement, l'ajout d'éléments en partie supérieure de la poutre de pare-chocs peut engendrer certains inconvénients tels que la génération de point durs sous-capot préjudiciables aux exigences de déformabilité du véhicule en cas de choc piéton, une diminution du caractère compressible de la face avant ou encore un risque accru d'endommagement du groupe moto-ventilateur en cas de choc, par exemple un endommagement du condenseur dû à un choc avec le MEAP. De tels risques diminuent le classement du véhicule selon le système RCAR (Research Council for Automobile Repairs). EP2080658 décrit un ensemble selon le préambule de la revendication 1.

L'invention a pour objectif de remédier à au moins un des inconvénients de l'art antérieur en permettant la mise en place, en regard d'un groupe moto-ventilateur, d'un MEAP dont la surface de prise d'air s'étend sur une hauteur supérieure à celle de la poutre supérieure avant de pare-chocs sans pour autant limiter les performances du véhicule en cas de choc piéton et/ou d'altérer son classement selon le système RCAR.

A cet effet l'invention a pour objet un ensemble selon la revendication 1. Selon des modes particuliers de réalisation, l'invention peut comprendre l'une ou l'autre des caractéristiques suivantes prises isolément ou selon toutes les combinaisons possibles :
- Le module d'entrée d'air piloté comprend une face d'orientation verticale disposée en regard du groupe-moto-ventilateur et comportant un bord supérieur et un bord inférieur, l'ensemble étant remarquable en ce qu'au moins une patte d'appui est reliée au bord supérieur dudit module d'entrée d'air piloté ou se place en appui au niveau dudit bord supérieur. De préférence toutes les pattes d'appui sont reliées au bord supérieur dudit module d'entrée d'air piloté ou se placent en appui au niveau dudit bord supérieur.
- Le module d'entrée d'air piloté comprend un support et deux dispositifs distincts d'ouverture et de fermeture de volets mobiles formant des cassettes, lesdites cassettes étant disposées étagées l'une au-dessus de l'autre de sorte à distinguer une cassette supérieure et une cassette inférieure, l'ensemble étant remarquable en ce qu'au moins une patte d'appui est reliée à la cassette supérieure ou se place en appui sur la cassette supérieure.
- Le module d'entrée d'air piloté comprend un support et deux dispositifs distincts d'ouverture et de fermeture de volets mobiles formant des cassettes, lesdites cassettes étant disposées étagées l'une au-dessus de l'autre de sorte à distinguer une cassette supérieure et une cassette inférieure, l'ensemble étant remarquable en ce qu'au moins une patte d'appui est venue de matière avec le support ou avec la cassette supérieure.
- La ou les pattes d'appui sont régulièrement distribuées le long du module d'entrée d'air piloté selon la direction transversale du véhicule.
- Au moins une patte d'appui comprend une zone de résistance mécanique amoindrie montrant une épaisseur et/ou une largeur inférieure au reste de la patte d'appui. De préférence, la zone de résistance amoindrie présente une épaisseur et/ou une largeur inférieure à l'épaisseur et/ou la largeur des extrémités de la patte d'appui respectivement.
- Au moins une patte d'appui est réalisée en matériau composite comprenant une matrice en résine thermoplastique ou thermodurcissable et un renfort en fibres, de préférence le renfort en fibres comprend des fibres de verre et/ou la matrice est sélectionnée dans le groupe comprenant les résines polypropylène, polyamide, polyphtalamide, polyétheréthercétone, polysulfure de phénylène, polyamide-imide, polyetherimide, polyacrylamide, polyépoxyde, polyester insaturés, vinylester ou polyester-vinylester.
- Le module d'entrée d'air piloté est dimensionné pour être fixé sur le groupe moto-ventilateur de sorte à ce que son bord supérieur soit plus haut selon la direction verticale que la poutre supérieure de pare-chocs du véhicule, placée en regard dudit module d'entrée d'air piloté.
- Le groupe moto-ventilateur comprend une face d'orientation verticale disposée en regard du module d'entrée d'air piloté et comportant un bord supérieur et un bord inférieur, l'ensemble étant remarquable en ce qu'au moins une patte d'appui est reliée au bord supérieur dudit groupe moto-ventilateur ou se place en appui au niveau dudit bord supérieur.
- Le groupe moto-ventilateur est destiné à être fixé sur les traverses inférieure et supérieure de façade d'un véhicule au moyen de plots mobiles configurés pour maintenir le groupe moto-ventilateur en position lorsqu'ils sont clippés et pour autoriser une course d'enfoncement selon l'axe longitudinal du véhicule sur une distance prédéfinie, par exemple de 40 mm, lorsqu'ils sont déclippés. De préférence, les plots mobiles présentent un seuil de déclippage, de sorte à se déclipper lorsqu'une force supérieure à ce seuil est exercée sur le groupe-motoventilateur.
- La ou les pattes d'appui s'étendent longitudinalement depuis l'arrière du MEAP et sont dimensionnées pour se placer en appui sur le groupe moto-ventilateur lorsque le MEAP est fixé sur le groupe moto-ventilateur.
- La zone de résistance amoindrie est formée par une encoche pratiquée dans l'épaisseur et/ ou la largeur de la patte d'appui, de préférence au milieu selon sa longueur.
- Le MEAP comprend deux cassettes disposées étagées l'une au-dessus de l'autre et séparées selon la hauteur par un dégagement d'une hauteur au moins égale à celle de la poutre de pare-chocs et disposé en face de ladite poutre de pare-chocs.

Enfin l'invention a pour objet un véhicule remarquable en ce qu'il comprend un ensemble tel que défini plus avant. Comme on l'aura compris à la lecture de la définition qui vient d'en être donnée, l'invention consiste selon un premier aspect à fournir un point d'appui supplémentaire entre le MEAP et le groupe moto-ventilateur qui va limiter, voire éviter, le fléchissement du MEAP sous l'effort de poussée engendré par le choc et donc limiter les risques d'endommagement du groupe moto-ventilateur. Ce point d'appui supplémentaire, qui vient s'ajouter aux points de fixation du MEAP au groupe moto-ventilateur va permettre de favoriser le déclippage du groupe moto-ventilateur et le déplacement de l'ensemble GMV-MEAP vers l'arrière du véhicule par une meilleure transmission au groupe moto-ventilateur des efforts exercés par les éléments de pare-chocs sur le MEAP. En cas de choc, le déclippage du groupe moto-ventilateur lui permet de reculer sur une distance prédéfinie, par exemple 40 mm, entrainant avec lui le MEAP. Une telle disposition permet d'améliorer le comportement en compressibilité de la façade avant.

Selon un deuxième aspect de l'invention, l'appui supplémentaire entre le MEAP et le groupe moto-ventilateur se fait par le biais d'une patte qui est rigide lorsqu'une force parallèle à l'axe longitudinal du véhicule lui est appliquée mais qui est fusible lorsqu'une force dont la direction présente un angle avec l'horizontal lui est appliquée. Par rigide, on entend que la patte d'appui ne se rompt par en deçà d'un seuil défini tel que par exemple une force de direction parallèle à l'axe longitudinal du véhicule de l'ordre de 2 X 50 daN. L'invention est remarquable en ce qu'elle présente un moyen passif de protection sélective du GMV ou d'un piéton. L'invention va en effet protéger le GMV en cas de choc frontal. Néanmoins en cas de choc non frontal, elle va passivement reconnaître un choc piéton, de par l'angle de ce choc, et va alors privilégier la protection du piéton au détriment du GMV.

L'invention sera bien comprise et d'autres aspects et avantages apparaîtront clairement au vu de la description qui suit, donnée à titre d'exemple en référence aux planches de dessins annexées sur lesquelles :
- La figure 1 est une vue schématique de face d'un ensemble formé par un groupe moto-ventilateur et un MEAP selon l'invention.
- La figure 2 est une vue schématique de profil d'un ensemble formé par un groupe moto-ventilateur et un MEAP selon l'invention.
- La figure 3 représente un exemple de réalisation d'une patte d'appui selon l'invention.
- La figure 4 montre des tests de comparaison d'effort en choc fémur avec et sans un ensemble selon l'invention.

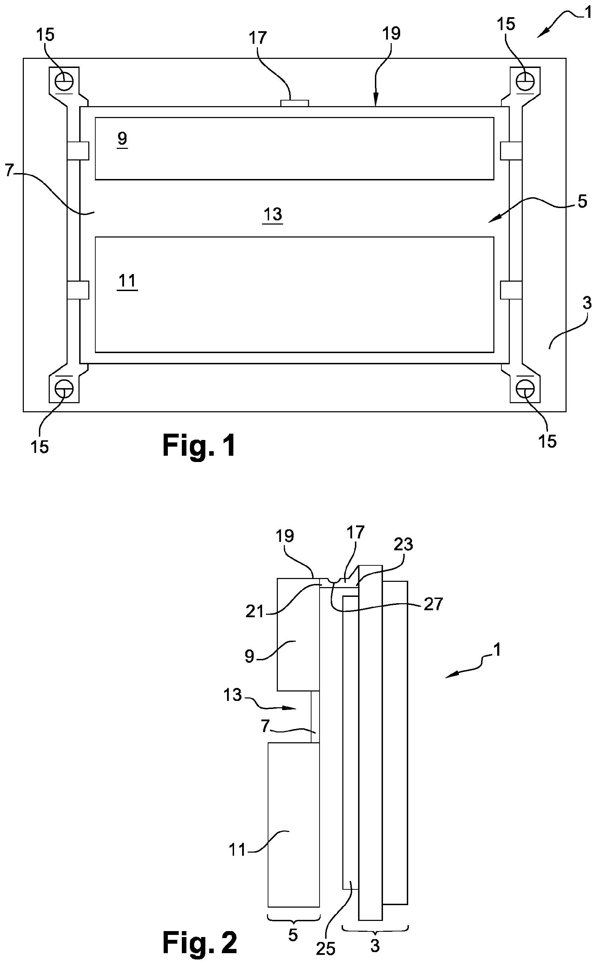

On se référera tout d'abord à la figure 1 montrant une vue schématique de face d'un ensemble 1 selon l'invention comprenant un groupe moto-ventilateur 3 et un module d'entrée d'air piloté 5 (MEAP 5) et au moins une patte d'appui 17 disposée entre eux. Le MEAP 5 comprend un support 7 et deux cassettes (9, 11) comprenant chacune un dispositif mécanique d'ouverture et de fermeture ou de limitation du passage d'air en direction du groupe moto-ventilateur par le biais de volets mobiles (non représentés). Les cassettes (9, 11) sont disposées étagées l'une au-dessus de l'autre selon la direction verticale, de sorte que l'on distingue une cassette supérieure 9 et une cassette inférieure 11. Les cassettes (9, 11) sont séparées par l'une de l'autre par un espacement 13 en face avant du MEAP 5 destiné à recevoir la poutre de pare-chocs (non-représentée) en cas de choc afin de ne pas gêner sa course d'enfoncement. La cassette inférieure 11 est donc située selon un axe vertical à une hauteur inférieure à celle de la poutre de pare-chocs, et la cassette supérieure 9 est située à une hauteur supérieure à celle de la poutre de pare-chocs.

Néanmoins une telle configuration, bien que préférable n'est pas limitative de l'invention. L'invention peut s'appliquer à tout ensemble comprenant un MEAP fixé sur le groupe moto-ventilateur. En effet, selon l'invention, le MEAP 5 est fixé sur la face avant du groupe mot-ventilateur 3 par son support 7 par le biais de quatre moyens de fixation 15 tels que par exemple des vis, disposés aux quatre coins du support 7.

L'invention est remarquable en ce que l'ensemble formé par le groupe moto-ventilateur 3 et le MEAP 5 comprend en outre au moins une patte d'appui 17 disposée entre le groupe moto-ventilateur 3 et le MEAP 5. La patte d'appui 17 s'étend selon la direction longitudinale du véhicule et comprend deux extrémités. Une extrémité est reliée au MEAP 5 ou au groupe moto-ventilateur 3 et l'autre extrémité est destinée à se placer en appui sur le groupe moto-ventilateur 3 ou le MEAP 5 respectivement. Selon une mise en oeuvre préférée de l'invention, une extrémité de la patte d'appui 17 est reliée au MEAP 5 et l'autre extrémité est destinée à se placer en appui contre le groupe moto-ventilateur 3.

On se référera à présent la figure 2 qui présente une vue de profil d'un exemple de réalisation d'un ensemble 1 selon l'invention. On voit que la patte d'appui 17 est reliée par une de ses extrémités 21 (ou extrémité de liaison) au MEAP 5. La liaison de la patte d'appui 17 peut se faire par tout moyen tel que par exemple par collage, clippage ou vissage. On aura compris que si l'invention est ici illustrée par une liaison entre la patte d'appui et le MEAP, elle s'applique également aux ensembles pour lesquels la patte d'appui est reliée au groupe moto-ventilateur ou à la fois au MEAP et au groupe moto-ventilateur.

Selon un exemple de réalisation de l'invention, la patte d'appui 17 est venue de matière avec le support 7 ou une des cassettes (9, 11), de préférence avec la cassette supérieure 9 du MEAP 5. Ainsi, la patte d'appui 17 peut être moulée directement avec le support 7 du MEAP 5 ou avec un des composants d'une des cassettes (9, 11), c'est-à-dire d'un des dispositifs d'ouverture et de fermeture de volets mobiles configuré pour autoriser, limiter ou interdire, sur commande, le passage d'air en direction du groupe moto-ventilateur 3.

L'autre extrémité 23 (ou extrémité d'appui) de la patte d'appui 17 est destinée à se placer en appui sur le groupe moto-ventilateur 3 (ou sur le MEAP lorsque la patte d'appui est reliée au groupe moto-ventilateur, lorsque la patte d'appui est reliée à la fois au MEAP et au groupe moto-ventilateur l'une des deux extrémités est considérée comme tant l'extrémité d'appui). La patte d'appui 17 est donc dimensionnée pour s'étendre jusqu'à se placer en appui sur l'élément (GMV ou MEAP) disposé en regard de celui sur lequel elle est reliée (MEAP ou GMV respectivement).

Dans le cadre de l'invention, elle peut également être dimensionnée pour présenter un petit jeu, par exemple un jeu de l'ordre de quelques millimètres, avec l'élément (GMV ou MEAP) disposé en regard de celui sur lequel elle est reliée, de sorte à se placer en appui sur ledit élément suite à un effort exercé selon la direction longitudinale sur le MEAP 5 qui aurait pour conséquence de le déplacer en direction du groupe moto-ventilateur 3. De préférence au moins une des extrémités d'au moins une patte d'appui 17 est évasée. Par exemple, l'extrémité d'appui 23 est évasée de sorte à montrer une surface d'appui plus importante que la surface de liaison de l'extrémité 21 de liaison.

Le MEAP 5 est typiquement monté avec une orientation verticale, si bien qu'il présente un bord supérieur 19 et un bord inférieur. Le bord supérieur du MEAP peut être le bord supérieur du support ou de la cassette supérieure selon les MEAP. Selon un mode de réalisation préféré de l'invention, la patte d'appui 17 est reliée ou est destinée à se placer en appui en partie supérieure du support 7 du MEAP ou de la cassette supérieure 9 du MEAP 5. De préférence, la patte d'appui 17 est reliée au bord supérieur 19 du MEAP 5, au niveau du support 7 ou de la cassette supérieure 9. Selon un mode réalisation préféré de l'invention au moins une patte d'appui 17 est reliée à la cassette supérieure 9 ou se place en appui sur la cassette supérieure 9 de préférence au niveau du bord supérieur de celle-ci.

L'ensemble 1 comprend au moins une patte d'appui 17, par exemple au moins deux pattes d'appui. De préférence, la ou les pattes d'appui 17 sont régulièrement distribuées le long du module d'entrée d'air piloté 5 selon la direction transversale du véhicule. Ainsi, et comme illustré sur la figure 1, lorsque l'ensemble 1 comprend une patte d'appui 17 celle-ci est disposée préférentiellement en position centrale selon l'axe transversal du véhicule. Lorsque l'ensemble comprend au moins deux pattes d'appui, celles-ci sont préférentiellement régulièrement distribuées le long du MEAP 5 selon la direction transversale du véhicule.

La présence d'au moins une patte d'appui 17 va permettre de mieux répartir les efforts résultant d'un choc et auxquels est soumis le MEAP 5. En effet, ces efforts vont pousser le MEAP 5 vers l'arrière du véhicule donc en direction du groupe moto-ventilateur. D'une part, la présence d'au moins une patte d'appui 17 permet de limiter voire d'éviter le fléchissement du MEAP 5 en direction du groupe moto-ventilateur 3 sous l'effort, fléchissement qui aurait pour conséquence de générer un impact entre eux et en particulier le condenseur 25 du groupe moto-ventilateur 3. D'autre part la présence d'au moins un point d'appui s'ajoutant aux fixations du MEAP 5 sur le groupe moto-ventilateur va permettre une meilleure transmission des efforts et aider au déclippage du groupe moto-ventilateur 3. La présence d'au moins une patte d'appui 17 va donc favoriser à l'enfoncement de l'ensemble vers l'arrière du véhicule en cas de choc et donc améliorer la compressibilité de la face avant du véhicule. On comprend que la présence d'au moins une patte d'appui 17 entre le MEAP 5 et le groupe moto-ventilateur 3 permet de gagner en réparabilité du véhicule et donc en classe RCAR.

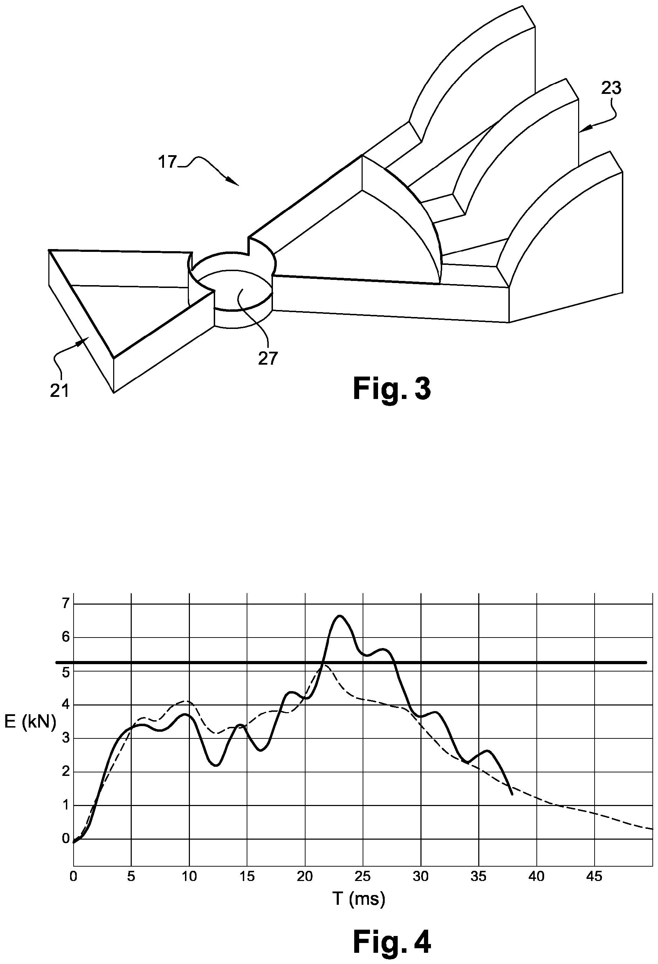

Comme vu plus avant, la ou les pattes d'appui 17 peuvent être en appui direct ou présenter un léger jeu avec l'élément sur lequel elles sont destinées à se placer en appui. Lorsqu'elles sont en appui ou lorsque le jeu est très faible, la présence d'une patte d'appui en partie supérieure de l'ensemble et située dans le véhicule à une hauteur supérieure à la hauteur de la poutre de pare-chocs pourrait générer un point dur sous capot préjudiciable à un bon comportement du véhicule en cas de choc piéton. C'est pourquoi, selon l'invention et tel qu'illustré aux figures 2 et 3, au moins une patte d'appui 17 et de préférence toutes les pattes d'appui présentent une zone de résistance mécanique amoindrie 27 formant une zone fusible sous l'application d'une force formant un angle avec la direction longitudinale du véhicule ou avec l'horizontal. La patte d'appui 17 est fusible en ce sens qu'elle va se rompre ou se tordre au niveau de sa zone fusible 27 lorsqu'il lui est appliqué une force supérieure à un seuil donné et formant un angle compris entre 5 à 30°, de préférence entre 15 et 25°, avec l'horizontal. L'intensité de la force et l'angle sous lesquels la patte est fusible correspondent aux intensités et forces typiquement observées dans les cas de choc-piéton et en particulier de choc-fémur. L'homme du métier déterminera sans peine le seuil de fusibilité adéquat pour ne pas générer de point dur sous capot.

Selon un mode de réalisation préféré de l'invention, la zone fusible 27 présente une épaisseur et/ou une largeur inférieure au reste de la patte d'appui 17, de préférence une épaisseur inférieure. Elle se présente par exemple sous forme d'au moins une encoche 27 pratiquée sur la longueur de la patte d'appui 17 entre son extrémité de liaison 21 et son extrémité d'appui 23. Cette zone de résistance amoindrie 27 est configurée pour transmettre un effort lorsqu'il est dirigé selon la direction longitudinale du véhicule mais pour plier ou se rompre sous un effort appliqué selon une direction formant un angle avec l'horizontal. L'invention est remarquable en ce que dans le cas d'un choc frontal avec un véhicule ou un obstacle, la patte d'appui 17 sert à éviter le fléchissement du MEAP 5 et donc un impact éventuel avec le groupe moto-ventilateur. En revanche en cas de choc piéton, son caractère fusible va permettre d'éviter de former un point dur sous capot, même si cela peut avoir pour conséquence d'autoriser le fléchissement du MEAP et donc un impact avec le groupe moto-ventilateur 3. On voit que l'invention est remarquable en ce qu'elle permet au véhicule d'adopter de manière passive un comportement différent selon qu'il subit un choc par collision avec un autre véhicule ou avec un piéton. Dans le cas d'une collision avec un piéton, l'invention va protéger le piéton avant le véhicule.

Les courbes représentées sur la figure 4 illustrent les efforts reçus par le bassin d'un piéton en cas de choc-piéton avec un véhicule lorsque l'ensemble GMV-MEAP présente une patte d'appui fusible (courbe pointillée) ou non (courbe pleine). Les tests réalisés montrent bien que l'effort subit par le bassin sera moins important avec l'emploi d'une patte fusible selon l'invention. L'invention va donc limiter les blessures infligées au piéton, tout en permettant de mieux protéger le GMV en cas de choc frontal.

Selon une mise en oeuvre préférée de l'invention, la patte d'appui 17 peut être réalisée en matériau composite thermoplastique ou thermodurcissable. La fabrication de la patte d'appui 17 en matériau thermoplastique peut se faire par exemple par moulage ou tout autre procédé adapté connu de l'homme du métier. Le matériau choisi est préférentiellement composé d'une matrice polymère renforcée par exemple avec des fibres.

Quel que soit le procédé de fabrication choisi, l'homme du métier aura avantage à sélectionner la matrice polymère thermoplastique parmi un ou plusieurs matériaux choisis entre le polypropylène (PP), le polyphtalamide (PPA), le polyétheréthercétone (PEEK), polysulfure de phénylène (PPS), le polyamide-imide (PAI), le polyetherimide (PEI), le polyacrylamide (PAA), ou le polyamide (PA) tel que par exemple du polyamide 6 (PA 6 ou polycaprolactame) ou du polyamide 6.6 (PA 6.6 ou polyhexaméthylène adipamide).

Les fibres de renforcement peuvent être organiques ou non organiques, et peuvent comprendre des fibres ou un mélange de fibres sélectionnées parmi les fibres de verre, de carbone, de céramique, de graphite, naturelles telles que des fibres de lin, de chanvre ou de bambou, de polymères organiques tels que des fibres de polyester. De préférence les fibres sont des fibres de verre et/ou de carbone.

L'homme du métier choisira sans peine le matériau, les renforts éventuels et l'épaisseur de la patte d'appui 17 y compris dans sa zone fusible en fonction de la capacité de résistance et de fusibilité recherchée.

## Revendications

1. Ensemble (1) pour véhicule automobile comprenant un groupe moto-ventilateur (3) et un module d'entrée d'air piloté (5) fixé sur la face avant du groupe moto-ventilateur (3), le module d'entrée d'air piloté (5) comprenant au moins un dispositif d'ouverture et de fermeture de volets mobiles configuré pour autoriser, limiter ou interdire, sur commande, le passage d'air en direction du groupe moto-ventilateur (3) ; l'ensemble (1) comprenant en outre au moins une patte d'appui (17) reliée par une de ses extrémités au module d'entrée d'air piloté (5) ou au groupe moto-ventilateur (3) et destinée à placer son autre extrémité en appui sur le groupe moto-ventilateur (3) ou sur le module d'entrée d'air piloté (5) respectivement, la ou les pattes d'appui (17) présentant une zone (27) de résistance mécanique amoindrie configurée pour plier ou rompre sous l'application d'une force dont la direction forme un angle avec l'horizontal, **caractérisé en ce que** l'extrémité d'au moins une patte d'appui destinée à se placer en appui sur le groupe moto-ventilateur ou sur le module d'entrée d'air piloté est évasée de sorte à montrer une surface d'appui plus importante que la surface de liaison de l'autre extrémité reliée au module d'entrée d'air piloté ou au groupe moto ventilateur respectivement.

2. Ensemble (1) selon la revendication 1 le module d'entrée d'air piloté (5) comprenant une face d'orientation verticale disposée en regard du groupe-moto-ventilateur (3) et comportant un bord supérieur (19) et un bord inférieur, l'ensemble étant **caractérisé en ce qu'**au moins une patte d'appui (17) est reliée au bord supérieur (19) dudit module d'entrée d'air piloté (5) ou se place en appui au niveau dudit bord supérieur (19).

3. Ensemble (1) selon la revendication 1 ou 2, le module d'entrée d'air piloté (5) comprenant un support (7) et deux dispositifs distincts d'ouverture et de fermeture de volets mobiles formant des cassettes (9,11), lesdites cassettes étant disposées étagées l'un au-dessus de l'autre de sorte à distinguer une cassette supérieure (9) et une cassette inférieure (11), l'ensemble (1) étant **caractérisé en ce qu'**au moins une patte d'appui (17) est reliée à la cassette supérieure (9) ou se place en appui sur la cassette supérieure (9).

4. Ensemble (1) selon l'une des revendications 1 à 3, le module d'entrée d'air piloté (5) comprenant un support (7) et deux dispositifs distincts d'ouverture et de fermeture de volets mobiles formant des cassettes (9, 11), lesdites cassettes étant disposées étagées l'un au-dessus de l'autre de sorte à distinguer une cassette supérieure (9) et une cassette inférieure (11), l'ensemble (1) étant **caractérisé en ce qu'**au moins une patte d'appui (17) est venue de matière avec le support (7) ou avec la cassette supérieure (9).

5. Ensemble (1) selon l'une des revendications 1 à 4 **caractérisé en ce que** la ou les pattes d'appui (17) sont régulièrement distribuées le long du module d'entrée d'air piloté (5).

6. Ensemble (1) selon l'une des revendications 1 à 5 **caractérisé en ce qu'**au moins une patte d'appui (17) présente une zone de résistance mécanique amoindrie (27) montrant une épaisseur et/ou une largeur inférieure au reste de la patte d'appui.

7. Ensemble (1) selon l'une des revendications 1 à 6 **caractérisé en ce qu'**au moins une patte d'appui (17) est réalisée en matériau composite comprenant une matrice en résine thermoplastique ou thermodurcissable et un renfort en fibres, de préférence le renfort en fibres comprend des fibres de verre et/ou la matrice est sélectionnée dans le groupe comprenant les résines polypropylène, polyamide, polyphtalamide, polyetherethercétone, polysulfure de phénylène, polyamide-imide, polyetherimide, polyacrylamide, polyépoxyde, polyester insaturés, vinylester ou polyester-vinylester.

8. Véhicule **caractérisé en ce qu'**il comprend un ensemble selon l'une des revendications 1 à 7.

## Patentansprüche

1. Anordnung (1) für Kraftfahrzeug, die einen Lüftersatz (3) und ein Eingangsmodul gesteuerter Luft (5), das auf der Frontseite des Lüftersatzes (3) montiert ist, umfasst, wobei das Eingangsmodul gesteuerter Luft (5) mindestens eine Öffnungs- und Schließvorrichtung seiner beweglichen Klappen umfasst, die konfiguriert ist, um auf Befehl das Durchgehen von Luft in Richtung des Lüftersatzes (3) zu gestatten, einzuschränken oder zu untersagen; wobei die Anordnung (1) außerdem mindestens eine Auflagepratze (17) umfasst, die durch eines ihrer Enden mit dem Eingangsmodul gesteuerter Luft (5) oder dem Lüftersatz (3) verbunden und dazu bestimmt ist, jeweils sein anderes Ende in Auflage auf dem Lüftersatz (3) oder auf dem Eingangsmodul gesteuerter Luft (5) zu platzieren, wobei die Auflagepratze oder Auflagepratzen (17) eine Zone (27) mit verringertem mechanischem Widerstand aufweisen, die konfiguriert ist, um unter Anlegung einer Kraft, deren Richtung einen Winkel mit der Horizontalen bildet, zu falten oder zu brechen, **dadurch gekennzeichnet, dass** das Ende mindestens einer Auflagepratze, die dazu bestimmt ist, sich in Auflage auf dem Lüftersatz oder auf dem Eingangsmodul gesteuerter Luft zu platzieren, derart aufgeweitet ist, dass eine Auflageoberfläche gezeigt wird, die größer ist als die Verbindungsoberfläche des anderen Endes, die jeweils mit dem Eingangsmodul gesteuerter Luft oder mit dem Lüftersatz verbunden ist.

2. Anordnung (1) nach Anspruch 1, wobei das Eingangsmodul gesteuerter Luft (5) eine vertikale Ausrichtungsfläche umfasst, die gegenüber dem Lüftersatz (3) angeordnet ist und einen oberen Rand (19) und einen unteren Rand umfasst, Anordnung **dadurch gekennzeichnet, dass** mindestens eine Auflagepratze (17) mit dem oberen Rand (19) des Eingangsmoduls gesteuerter Luft (5) verbunden ist oder sich in Auflage im Bereich des oberen Rands (19) platziert.

3. Anordnung (1) nach Anspruch 1 oder 2, wobei das Eingangsmodul gesteuerter Luft (5) einen Träger (7) und zwei getrennte Öffnungs- und Schließvorrichtungen beweglicher Klappen, die Kassetten (9, 11) bilden, umfasst, wobei die Kassetten abgestuft übereinander derart angeordnet sind, dass eine obere Kassette (9) und eine untere Kassette (11) unterschieden werden, wobei die Anordnung (1) **dadurch gekennzeichnet ist, dass** mindestens eine Auflagepratze (17) mit der oberen Kassette (9) verbunden ist oder sich auf der oberen Kassette (9) in Auflage platziert.

4. Anordnung (1) nach einem der Ansprüche 1 bis 3, wobei das Eingangsmodul gesteuerter Luft (5) einen Träger (7) und zwei getrennte Öffnungs- und Schließvorrichtungen beweglicher Klappen umfasst, die Kassetten (9, 11) bilden, wobei die Kassetten abgestuft übereinander derart angeordnet sind, dass eine obere Kassette (9) und eine untere Kassette (11) unterschieden werden, wobei die Anordnung (1) **dadurch gekennzeichnet ist, dass** mindestens eine Auflagepratze (17) aus einem Stück mit dem Träger (7) oder mit der oberen Kassette (9) besteht.

5. Anordnung (1) nach einem der Ansprüche 1 bis 4, **dadurch gekennzeichnet, dass** die Auflagepratze oder Auflagepratzen (17) regelmäßig entlang des Eingangsmoduls gesteuerter Luft (5) verteilt sind.

6. Anordnung (1) nach einem der Ansprüche 1 bis 5, **dadurch gekennzeichnet, dass** mindestens eine Auflagepratze (17) eine Zone mit vermindertem mechanischem Widerstand (27) aufweist, die eine Stärke und/oder eine Breite zeigt, die kleiner ist als der Rest der Auflagepratze.

7. Anordnung (1) nach einem der Ansprüche 1 bis 6, **dadurch gekennzeichnet dass** mindestens eine Auflagepratze (17) aus einem Verbundmaterial hergestellt ist, das eine Matrix aus Thermoplastharz oder wärmehärtbarem Harz und einer Verstärkung aus Fasern umfasst, wobei die Verstärkung aus Fasern bevorzugt Glasfasern umfasst, und/oder die Matrix aus der Gruppe ausgewählt ist, die die Polypropylen-, Polyamid-, Polyphtalamid-, Polyetheretherketon-, Phenylpolysulfid-, Polyamidimid-, Polyetherimid-, Polyacrylamid-, Polyepoxidharze, ungesättigte Polyester, Vinylester oder Polyestervinylester umfasst.

8. Fahrzeug **dadurch gekennzeichnet, dass** es eine Anordnung nach einem der Ansprüche 1 bis 7 umfasst.

## Claims

1. An assembly (1) for a motor vehicle including a motor-fan unit (3) and a controlled air inlet module (5) fixed on the front face of the motor-fan unit (3), the controlled air inlet module (5) including at least one device for opening and closing movable flaps configured to permit, limit or prevent, on command, the passage of air in the direction of the motor-fan unit (3); the assembly (1) further comprising at least one bearing lug (17) connected by one of its ends to the controlled air inlet module (5) or to the motor-fan unit (3) and intended to place its other end bearing on the motor-fan unit (3) or on the controlled air inlet module (5) respectively, the bearing lug(s) (17) having an area (27) of weakened mechanical resistance, configured to bend or break under the application of a force, the direction of which forms an angle with the horizontal, **characterized in that** the end of at least one bearing lug intended to be placed bearing on the motor-fan unit or on the controlled air inlet module is flared so as to present a larger bearing surface than the connection surface of the other end connected to the controlled air inlet module or to the motor-fan unit respectively.

2. The assembly (1) according to claim 1, the controlled air inlet module (5) including a face of vertical orientation disposed facing the motor-fan unit (3) and comprising an upper edge (19) and a lower edge, the assembly being **characterized in that** at least one bearing lug (17) is connected to the upper edge (19) of said controlled air inlet module (5) or is placed bearing at the level of said upper edge (19).

3. The assembly (1) according to claim 1 or 2, the controlled air inlet module (5) including a support (7) and two distinct devices for opening and closing movable flaps forming cassettes (9, 11), said cassettes being arranged in a tiered manner one above the other so as to distinguish an upper cassette (9) and a lower cassette (11), the assembly (1) being **characterized in that** at least one bearing lug (17) is connected to the upper cassette (9) or is placed bearing on the upper cassette (9).

4. The assembly (1) according to one of claims 1 to 3, the controlled air inlet module (5) including a support (7) and two distinct devices for opening and closing movable flaps forming cassettes (9, 11), said cassettes being disposed in a tiered manner one above the other so as to distinguish an upper cassette (9) and a lower cassette (11), the assembly (1) being **characterized in that** at least one bearing lug (17) is made in a single piece with the support (7) or with the upper cassette (9).

5. The assembly (1) according to one of claims 1 to 4, **characterized in that** the bearing lug(s) (17) are evenly distributed along the controlled air inlet module (5).

6. The assembly (1) according to one of claims 1 to 5, **characterized in that** at least one bearing lug (17) has an area of weakened mechanical resistance (27) having a thickness and/or a width smaller than the remainder of the bearing lug.

7. The assembly (1) according to one of claims 1 to 6, **characterized in that** at least one bearing lug (17) is made from composite material including a matrix of thermoplastic or thermosetting resin and a reinforcement made of fibres, preferably the fibre reinforcement includes glass fibres and/or the matrix is selected from the group including polypropylene, polyamide, polyphthalamide, polyetheretherketone, polyphenylene sulphide, polyamide-imide, polyetherimide, polyacrylamide, polyepoxide, unsaturated polyester, vinylester or polyester-vinylester resins.

8. A vehicle, **characterized in that** it includes an assembly according to one of claims 1 to 7.
